(19) Europäisches Patentamt
European Patent Office
Office européen des brevets

(11) **EP 2 141 637 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(51) Int Cl.:
*G06K 19/077* *(2006.01)* *G06K 19/07* *(2006.01)*

(21) Anmeldenummer: **09008513.5**

(22) Anmeldetag: **30.06.2009**

(54) **Tragbarer Datenträger mit aktiver Kontaktlosschnittstelle und Verfahren zum Betreiben**

Portable data carrier with active contactless interface and operating method

Support de données portatif doté d'une interface sans contact active et procédé de fonctionnement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **01.07.2008 DE 102008031149**

(43) Veröffentlichungstag der Anmeldung:
**06.01.2010 Patentblatt 2010/01**

(73) Patentinhaber: **Giesecke & Devrient GmbH 81677 München (DE)**

(72) Erfinder: **Finkenzeller, Klaus 85774 Unterföhring (DE)**

(56) Entgegenhaltungen:
**EP-A1- 0 992 366     GB-A- 2 321 726 US-B2- 7 304 577**

EP 2 141 637 B1

**Beschreibung**

Die Erfindung betrifft ein Verfahren zum automatischen Abgleich der Resonanzfrequenz eines Antennenschwingkreises eines portablen Datenträgers und einen entsprechend eingerichteten Datenträger.

Tragbare Datenträger, wie Chipkarten oder Massenspeicherkarten, weisen häufig sowohl eine kontaktbehaftete Schnittstelle als auch eine kontaktlose Schnittstelle auf. Die tragbaren Datenträger können somit auch als Transponder in RFID (Radio Frequency Identification)-Systemen eingesetzt werden. Herkömmlich erfolgt sowohl die Energieversorgung eines Transponders in einem RFID-System als auch der Datenaustausch zwischen dem Transponder und einem Lesegerät unter Verwendung magnetischer oder elektromagnetischer Felder. RFID-Transponder besitzen eine elektronische Schaltung und je nach Frequenzbereich einen Antennenspule (z.B. 13,56 MHz) oder eine elektromagnetische Antenne (z.B. 868 MHz). Über die Antenne kann dem Feld des Lesegeräts die zum Betrieb des Transponders nötige Energie entnommen sowie die Datenübertragung durchgeführt werden.

Bis zu einem bestimmten Abstand zwischen Lesegerät und Transponder, welcher auch als Energiereichweite bezeichnet wird, kann der Transponder dem Feld des Lesegeräts gerade noch ausreichend Energie zum Eigenbetrieb seiner Schaltung aufnehmen. Die Energieaufnahme des Transponders aus dem elektrischen Feld hängt auch von weiteren Parametern ab. Dazu gehören bei konstantem elektromagnetischem Feld insbesondere die Position des Datenträgers im Feld und die geometrische Ausgestaltung der Antenne, beispielsweise einer Spule, des Datenträgers.

Die Reichweite, innerhalb derer eine Kommunikation im System durch Datenübertragung möglich ist, kann erhöht werden durch Verwendung von aktiven Transpondern, also Transpondern mit eigener Energieversorgung. Die Energieversorgung des aktiven Transponders, beispielsweise in Form einer Batterie, betreibt dessen elektronische Schaltung. Herkömmliche Transponder ohne eigene Energieversorgung werden als passive Transponder bezeichnet.

RFID-Systeme, beispielsweise für verschiedene Kopplungsarten, sowie eine Lastmodulation unter Verwendung eines Hilfsträgers in induktiv gekoppelten RFID-Systemen werden insbesondere unter Kapitel 3.2 in dem "RFID-Handbuch", 4. Auflage, Hansa Verlag, von Klaus Finkenzeller beschrieben.

Zur einfachen und schnellen kontaktlosen Kommunikation zwischen zwei Geräten wurde eine induktive Übertragungstechnik entwickelt, welche als sog. Nahfeldkommunikation (NFC, Near Field Communication) bekannt ist. Diese Technik wird beispielsweise in Mobilfunkgeräten oder PDAs (Personal Digital Assistent) integriert, um eine Kommunikation zwischen den Geräten oder mit einem Computer zu ermöglichen. Die Kopplung der beiden Geräte findet über Spulen statt, wobei die Trägerfrequenz wie in RFID-Systemen 13,56 MHz beträgt. Wie in dem NFC-Standard ECMA 340 näher beschrieben, gibt es in NFC-Systemen einen aktiven Kommunikationsmodus und einen passiven Kommunikationsmodus. In dem aktiven Modus erzeugen zwei NFC-Einheiten abwechselnd ihr eigenes RF-Feld als Signalträger, schalten also wie in einem klassischen Mobilfunksystem, beide aufeinander abgestimmt, zwischen Sende- und Empfangsbetrieb hin und her. In dem passiven Modus müssen sich die beiden NFC-Einheiten dagegen einigen, welche Einheit als Lesegerät agiert und ein Feld erzeugt, das die andere Einheit dann mittels Lastmodulation beeinflussen kann. Primär aufgrund der verwendeten kleinen Antennendurchmesser sind in NFC-Systemen nur Kommunikationsreichweiten von bis zu 20 cm möglich.

Selbst bei aktiven Transpondern ergibt sich das Problem, dass die Datenübertragung vom Transponder zum Lesegerät durch die mit zunehmendem Abstand zwischen Lesegerät und Transponder schwächer werdenden Signale begrenzt ist. In der Regel können daher beispielsweise bei induktiv gekoppelten Systemen, welche nach dem Prinzip der Lastmodulation Daten zum Lesegerät übertragen, auch mit aktivem Transponder keine größeren Reichweiten als 1 bis 2 m erzielt werden.

Aus der EP 1 801 741 A2 und der WO 2006/000446 A1 der Anmelderin sind Verfahren zum Erhöhen der Reichweite der Datenübertragung in einem System mit einem Transponder-Lesegerät und einer Transpondereinheit bekannt, bei denen eine sog. aktive Lastmodulation durchgeführt wird. Ohne eine Last- oder Rückstreuungsmodulation des Lesegerätfeldes ausführen zum müssen, sendet der tragbare Datenträger bzw. Transponder selber ein Feld aus, welches dem Lesegerät eine Modulation des Lesegerätfeldes durch einen Transponder vortäuscht. Hierdurch ist die Gesamtreichweite des Systems nicht mehr durch die Kommunikationsreichweite des Lesegeräts begrenzt, sondern darüber hinaus erweitert bis zu einer Sendereichweite des Transponders.

Bei Datenträgern mit einem derartigen aktiven RFID-Interface tritt das Problem auf, dass durch das Einstecken des Datenträgers, z.B. in Form einer Speicherkarte, in ein Endgerät, wie z.B. ein Mobilfunktelefon, bedingt durch Metallflächen in der Nähe des Datenträgers eine Verstimmung der Antenne auftreten kann. Der Grund hierfür liegt darin, dass in der Metallfläche Wirbelströme induziert werden, so dass sich die Resonanzfrequenz zu einer höheren Frequenz hin verschiebt. Hierzu ist es aus dem Stand der Technik bekannt, die Resonanzfrequenz eines Transponders nach der Herstellung, durch Hinzu- oder Wegschalten von Kondensatoren, abzugleichen. Die Kondensatoren werden dabei häufig auf dem Transponderchip integriert. In einem einmaligen Prozess werden dann sukzessive Kondensatoren hinzu oder weggeschaltet, bis eine optimale Resonanzfrequenz des Transponders erreicht wird. Nachteilig hieran ist jedoch, dass dies zu einem anderen Verhältnis von Kapazität der Kondensatoren und Induktivität der Antennenspule (C/L) in dem Antennenschwingkreis führt, wodurch sich ein Performance-Verlust ergibt.

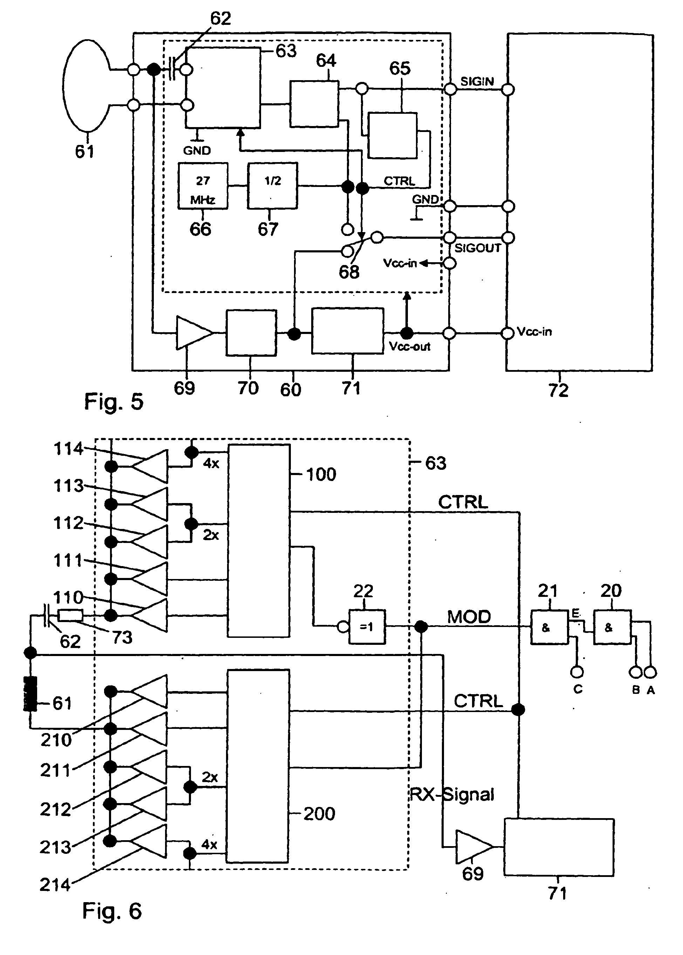

Die WO 2008/002303 A1 beschreibt verschiedene Lösungen zur dynamischen Anpassung der Resonanzfrequenz nach der Herstellung eines Datenträgers. In einer Ausführungsvariante (Fig. 5) kann ein reaktives Element zur dynamischen Anpassung der Resonanzfrequenz mit einer von mehreren Spulenanzapfungen der Spule verbunden werden. Die Spulenanzapfung erlaubt die Auswahl einer verschiedenen Anzahl von Windungen der magnetisch wirksamen Spule und damit die Auswahl eines aktiven Bereichs der Spule.

Aus der US 6,685,096 B1 (korrespondierend zur EP 1087 332 B1) ist ein Transponder bekannt, der verschiedene maximale Kommunikationsdistanzen zu einem Lesegerät einnehmen kann. Hierzu weist der Transponder Mittel auf, um die maximale Kommunikationsdistanz zu einem Lesegerät in Abhängigkeit von der ausgewählten oder aktivierten Anwendung unter den unterschiedlichen Anwendungen zu variieren. Diese Mittel sind alternativ dazu ausgebildet, um die äquivalente Impedanz der Elektronikeinheit oder den äquivalenten Widerstand der Elektronikeinheit zu variieren. In darin beschriebenen Ausführungsformen weist eine Spule des Antennenschwingkreises eine Spulenanzapfung auf, so dass eine Anzahl an Windungen der Spule über einen steuerbaren Schalter kurzgeschlossen werden kann. Nachteilig darin ist, dass der in den überbrückten Windungen fließende Kurzschlussstrom Wirbelströme verursacht und damit der eingangs beschriebenen und Probleme hervorrufenden Einbausituation des Datenträgers in der Nähe einer Metallfläche entspricht.

Anspruch 1 ist gegenüber US-A-7 304 577 abgegrenzt.

Es ist daher Aufgabe der vorliegenden Erfindung, ein Verfahren zum automatischen Abgleich der Resonanzfrequenz eines Antennenschwingkreises und einen entsprechend eingerichteten Datenträger anzugeben, welche einen Abgleich der Resonanzfrequenz dynamisch auf einfachere Weise ermöglichen, ohne die Güte des Schwingkreises signifikant zu verschlechtern.

Diese Aufgabe wird durch ein Verfahren mit den Merkmalen des Patentanspruches 1 sowie einen Datenträger mit den Merkmalen des Patentanspruches 8 gelöst. Vorteilhafte Ausgestaltungen ergeben sich aus den abhängigen Patentansprüchen.

Die Erfindung schafft ein Verfahren zum automatischen Abgleich der Resonanzfrequenz eines Antennenschwingkreises eines portablen Datenträgers mittels einer eine Vielzahl von Spulenwindungen umfassenden Spule des Datenträgers. Das Verfahren zeichnet sich dadurch aus, dass eine geeignete Spulenwindungszahl in Abhängigkeit der Induktivität der Spule bestimmt wird und die Anzahl der Spulenwindungen der Spule aktiviert wird, die der geeigneten Spulenwindungszahl entspricht.

Der Erfindung liegt die Überlegung zu Grunde, dass bei einem in der Nähe einer Metalloberfläche angeordneten Antennenschwingkreis eines portablen Datenträgers, durch Wirbelstromeffekte verursacht, die Induktivität des Antenneschwingkreises verringert ist. Dies führt zunächst dazu, dass die Resonanzfrequenz der Spule zu höheren Frequenzen hin verstimmt wird. Zur Vermeidung der eingangs beschriebenen Probleme, die beim Parallelschalten von zusätzlichen Kondensatoren zur Schwingkreiskapazität auftreten, basiert die Erfindung darauf, die Induktivität möglichst konstant zu halten und zum Abgleich der Resonanzfrequenz eine Veränderung der Windungszahl der Spule vorzunehmen. Dahinter steckt die Überlegung, dass für einen bestimmten Induktivitätswert sich bei einer gegebenen Resonanzfrequenz eine maximale Güte ergibt. Wird bei einem Antennenschwingkreis mit optimaler Güte die Induktivität geringer, so kann zwar die ursprüngliche Resonanzfrequenz durch das Hinzuschalten zusätzlicher Kapazitäten wieder erreicht werden, die Güte wird jedoch immer geringer ausfallen. Es ist daher vorgesehen, die Windungszahl der Spule des Antennenschwingkreises reversibel derart anzupassen, dass unabhängig von der Umgebung des Antennenschwingkreises eine möglichst hohe Güte bei annähernd konstanter Resonanzfrequenz erreicht werden kann.

Ein Vorteil des Verfahrens besteht darin, dass dieses nach der Herstellung des Datenträgers und dem Einbau des Datenträgers in ein Endgerät durchgeführt werden kann.

Zweckmäßigerweise wird zum Bestimmen der geeigneten Spulenwindungszahl überprüft, ob die Induktivität (d.h. der Induktivitätswert) der Spule einer vorgegebenen Induktivität (d.h. einem vorgegebenen Induktivitätswert) bei einer vorgegebenen Resonanzfrequenz des Datenträgers vor dem Einbau in das Endgerät entspricht. Durch diese Überprüfung kann ein optimaler Induktivitätswert für den verstimmten Antennenschwingkreis aufgefunden werden, so dass eine hohe Güte bei vorgegebener Resonanzfrequenz erreicht werden kann.

Insbesondere werden zum Bestimmen der geeigneten Spulenwindungszahl an der Spule vorgesehene Spulenanzapfungen iterativ ausgewählt und es wird zumindest ein Parameter der Spule oder des Antennenschwingkreises ermittelt und auf ein Optimum hin überprüft. Je nach ausgewählter Spulenanzapfung ergibt sich eine unterschiedliche Windungszahl und damit eine unterschiedliche Induktivität der Spule. Durch die Auswahl der Spulenanzapfung und damit der unterschiedlichen Windungszahl kann derjenige Induktivitätswert gesucht werden, welcher dem vorgegebenen Induktivitätswert bei vorgegebener Resonanzfrequenz entspricht.

Gemäß einer ersten Variante wird als Parameter die Güte des Antennenschwingkreises ermittelt, wobei diejenige Anzahl an Spulenwindungen ausgewählt wird, bei der sich eine maximale Güte ergibt.

Gemäß einer weiteren Variante wird alternativ oder zusätzlich als Parameter die Kommunikationsreichweite des Datenträgers bestimmt, wobei diejenige Anzahl an Spulenwindungen ausgewählt wird, bei der sich eine maximale Kommunikationsreichweite ergibt. Bei dieser Ausgestaltungsvariante wird eine Kommunikation des Datenträgers mit einem Lesegerät benötigt, welche über die Antenne des Datenträgers oder eine Antenne des Endgeräts, mit welchem der Datenträger z.B. kontaktbehaftet verbunden ist, erfolgt. Mittels eines entsprechenden Ansteuerkommandos kann dann die Umschaltung zu den verschiedenen Spulenanzapfungen erfolgen, um durch iterative Verbindung mit einer jeweiligen Spulenanzapfung eine optimale Spulenanzapfung ausfindig machen zu können.

Gemäß einererfindungsgemäßen (zusätzlichen) Ausgestaltung wird als Parameter eine Spannung an der Spule des Antennenschwingkreises für jede der Spulenanzapfungen gemessen, während ein hochfrequentes Signal ausgesendet wird, wobei diejenige Anzahl an Spulenwindungen ausgewählt wird, bei der sich eine maximale Spannung ergibt. Insbesondere wird die Spannung an einem Knotenpunkt der Spule und einem Kondensator des Antennenschwingkreises gemessen. Zur Messung kann beispielsweise ein Level-Detektor verwendet werden. Um die beste der zur Verfügung stehenden Spulenanzapfungen ausfindig zu machen, wird nach Auswahl einer jeweiligen Spulenanzapfung für kurze Zeit ein Hochfrequenz-Signal durch den Datenträger ausgesendet und die Spannung an der Spule des Antennenschwingkreises gemessen. Für die optimale Anzapfung erreicht die gemessene Spannung ein Maximum.

Es ist weiterhin vorgesehen, dass diejenigen Spulenwindungen der Spule, welche nicht aktiviert werden, in einen hochohmigen Zustand geschaltet werden.

Gemäß einer weiteren zweckmäßigen Ausgestaltung erzeugt der Datenträger zum Übertragen von Daten zu einem Lesegerät, zu welchem Daten von Transpondern durch Modulation eines Feldes des Lesegerätes übertragen werden können, in einem aktiven Betriebsmodus ein eigenes Feld und sendet dieses als ein Signal, welches für das Lesegerät als eine Modulation des Lesegerätfeldes durch einen Transponder auswertbar ist. Ohne eine Last- oder Rückstreuungsmodulation des Lesegerätfeldes ausführen zu müssen, sendet also der tragbare Datenträger selber ein Feld aus, welches dem Lesegerät eine Modulation des Lesegerätfeldes durch einen Transponder vortäuscht. Dies wird als aktive Lastmodulation bezeichnet. Hierdurch ist die Gesamtreichweite des Systems nicht mehr durch die Kommunikationsreichweite des Lesegerätes begrenzt, sondern ist darüber hinaus erweitert bis zu einer Sendereichweite der Transpondereinheit. Das dabei gewählte Vorgehen entspricht dem in der EP 1 801 741 A2 und WO 2006/000446 A1 beschriebenen Vorgehen, deren Inhalte durch Bezugnahme in diese Anmeldung aufgenommen werden.

Eine Ausgestaltung des Verfahrens zeichnet sich weiterhin dadurch aus, dass in einem ersten Betriebsmodus das Empfangssignal einer Empfangsvorrichtung des Datenträgers daraufhin überwacht wird, ob sich das Lesegerät, mit dem der Datenträger ausgelesen werden kann, in Kommunikationsreichweite des Datenträgers befindet. Hierdurch ist es möglich, die Energieaufnahme des Datenträgers mit aktiver Lastmodulation soweit wie möglich zu verringern.

Die hierzu vorgesehene Leistungssteuerung (auch Power Management genannt) ist mit dem Empfangsteil des Datenträgers verbunden. Diese überwacht das Ausgangssignal des Empfängers kontinuierlich daraufhin, ob sich das Lesegerät, mit dem der Datenträger ausgelesen werden kann, in Kommunikationsreichweite befindet. Ein Kriterium dafür, ob sich der Datenträger in Kommunikationsreichweite zu einem Lesegerät befindet, ist z.B. das Anliegen eines Ausgangssignals an einem Signalausgang einer Empfangsvorrichtung des Datenträgers oder der Pegel des Signalausgangs.

Insbesondere ist vorgesehen, dass in dem ersten Betriebsmodus nicht benötigte Komponenten des Datenträgers in einen Stromsparmodus versetzt werden. Solche Komponenten sind beispielsweise ein Sicherheitselement (Secure Element), sofern dieses nicht von anderen Komponenten des Datenträgers oder des Endgeräts, in welchem der Datenträger eingesetzt ist, benötigt wird. Darüber hinaus sind nicht benötigte Komponenten in dem Stromsparmodus beispielsweise eine Frequenzaufbereitung, ein Timer, ein Modulator und dergleichen. Dabei werden die Ausgangstreiber eines Verstärkers jedoch in einem solchen Zustand gehalten, dass eine korrekte Anschaltung der Antennenspule für den Empfangsbetrieb garantiert ist. Gelangt der Datenträger in die Reichweite eines Lesegerätes, so wird der Stromsparmodus wieder verlassen und ein zweiter Betriebsmodus - der reguläre Betrieb - angenommen.

Es ist ferner vorgesehen, dass über eine Aktivierung einer Anzahl an parallel geschalteten Ausgangstreibern der Stromverbrauch und/oder die Ausgangsleistung des Datenträgers eingestellt wird. Eine in einem erfindungsgemäßen Datenträger betriebene Sendeendstufe besteht hierbei aus einer Vielzahl von Ausgangstreibern, die ausgangsseitig parallel geschaltet sind. Eingangsseitig sind die Ausgangstreiber zu unterschiedlichen Gruppen zusammengeschaltet. In Abhängigkeit eines Steuersignals kann ein Modulationssignal auf den Eingang eines oder mehrerer der Ausgangstreiber geschaltet werden. Anderenfalls befinden sich diese in einem hochohmigen Zustand. Je nachdem, wie viele der Ausgangstreiber in Abhängigkeit des Steuersignals mit dem Modulationssignal beaufschlagt sind, kann zum einen die Ausgangsleistung des Datenträgers eingestellt werden und zum anderen der Stromverbrauch an die für den Stromsparbetrieb notwendigen Komponenten angepasst werden.

Zweckmäßigerweise wird dabei der Pegel des Empfangssignals der Empfangsvorrichtung kontinuierlich überwacht zur Ableitung des Steuersignals für die Anzahl an Ausgangstreibern.

Eine Ausgestaltung umfasst ferner einen portablen Datenträger, umfassend einen integrierten Schaltkreis, eine eine Vielzahl von Spulenwindungen umfassende Spule eines Antennenschwingkreises, die zur Energieaufnahme aus einem elektromagnetischen Feld eingerichtet ist, in dem sich der Datenträger befindet. Der Datenträger zeichnet sich durch eine Aktivierungseinrichtung aus, die dazu eingerichtet ist, Spulenwindungen der Spule zur Energieaufnahme aus dem elektromagnetischen Feld zu aktivieren. Ferner ist eine Steuereinrichtung vorgesehen, die dazu eingerichtet ist, eine geeignete Spulenwindungszahl in Abhängigkeit der Induktivität der Spule zu bestimmen und eine Anzahl der Spulenwindungen der Spule, die der geeigneten Spulenwindungszahl entspricht, zu aktivieren.

Die Erfindung wird nachfolgend näher anhand von Ausführungsbeispielen in der Zeichnung beschrieben. Es zeigen:

Fig. 1   eine schematische Darstellung eines erfindungsgemäßen Datenträgers mit einer Anzapfungsauswahlvorrichtung,

Fig. 2   eine konkrete Realisierung der in Fig. 1 schematisch dargestellten Anzapfungsauswahlvorrichtung,

Fig. 3   den Verlauf der Güte Q bei konstanter Resonanzfrequenz des Antennenschwingkreises und veränderter Induktivität dessen Spule bei unterschiedlichen Ohmschen Widerständen der Induktivität der Spule,

Fig. 4   einen möglichen Verlauf der Antennenspannung bei Ansteuerung über verschiedene Spulenanzapfungen,

Fig. 5   eine um eine Leistungssteuerung erweiterte Schaltung eines aktiven RFID-Interfaces,

Fig. 6   eine mögliche Lösungsvariante eines Verstärkers des aktiven RFID-Interfaces, mit welcher die Ausgangsleistung der Sendestufe in Stufen eingestellt werden kann,

Fig. 7   bekannte Ansätze zur Verbindung eines Sicherheitselements mit einem aktiven RFID-Interface, und

Fig. 8   einen schematischen möglichen Aufbau eines aktiven RFID-Interfaces für einen sog. Touchpoint.

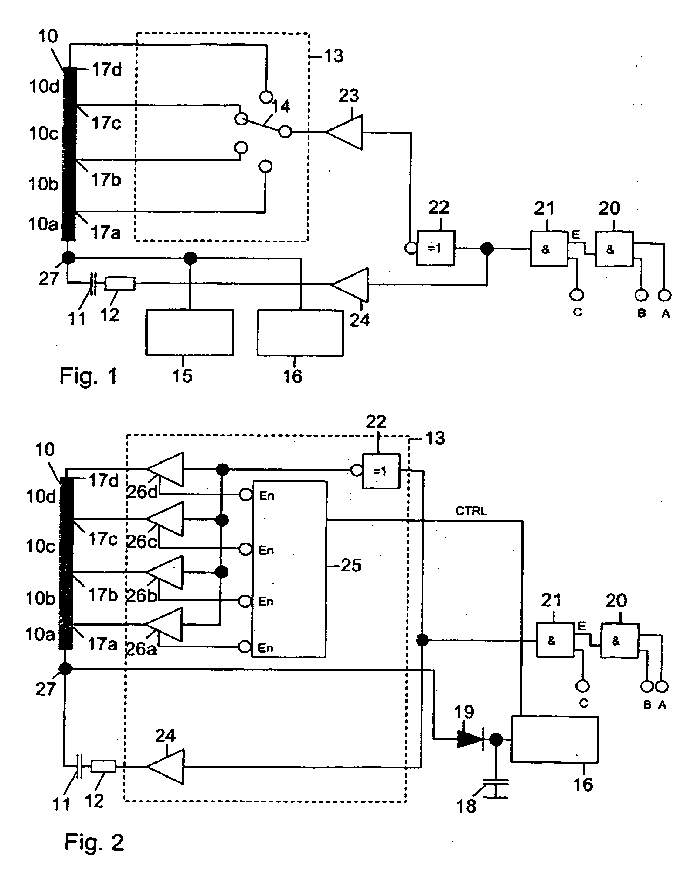

Fig. 1 zeigt in einer schematischen Darstellung die für einen automatischen Abgleich der Resonanzfrequenz eines Antennenschwingkreises eines portablen Datenträgers notwendigen Komponenten. Der erfindungsgemäße Datenträger umfasst Komponenten 20, 21, 22, 23, 24 zur Erzeugung einer aktiven Lastmodulation, wie diese in der EP 1 801 741 A2 und WO 2006/000446 A1 der Anmelderin beschrieben ist. Ferner umfasst der Datenträger eine Spule 10 mit beispielhaft vier Spulenanzapfungen 17a, 17b, 17c und 17d. Hierdurch teilt sich die Spule 10 in vier Spulenabschnitte mit jeweiligen Spulenwindungen 10a, 10b, 10c und 10d auf. Der Antennenschwingkreis des Datenträgers umfasst neben der Spule 10 einen Kondensator 11 sowie einen Widerstand 12, welche seriell mit der Spule 10 verschaltet sind. Über ihre Spulenanzapfungen 17a, 17b, 17c, 17d ist die Spule 10 mit einer Anzapfungsauswahlvorrichtung 13 verbunden.

Ein Eingang der Anzapfungsauswahlvorrichtung 13 ist mit einem Treiber 23 verbunden. Der Treiber 23 ist zusammen mit dem Treiber 24, der mit dem Widerstand 12 des Antennenschwingkreises verbunden ist, und dem XNOR-Gatter 22 Teil eines Verstärkers. Als Eingangssignal wird dem Verstärker ein Ausgangssignal des funktional einen Modulator bildenden UND-Gatters 21 zugeführt. Einem ersten Eingang des UND-Gatters 21 wird ein Signal E zugeführt, welches sich aus der UND-Verknüpfung durch das Gatter 20 eines Datensignals A und eines Hilfsträgersignals B (z.B. 848 KHz bei ISO/IEC 14443) ergibt. Einem zweiten Eingang des UND-Gatters 21 wird ein Trägersignal C (z.B. 13,56 MHz bei ISO/IEC 14443) zugeführt.

Ferner verfügt der Datenträger über eine Messvorrichtung 16, die beispielsweise als Level-Detektor ausgebildet ist. Mit der Messvorrichtung 16 kann die im Sendebetrieb an dem Antennenschwingkreis anstehende Spannung gemessen werden. Mit dem Bezugszeichen 15 ist ferner eine Empfangsvorrichtung (Receiver) gekennzeichnet, die ebenso wie die Messvorrichtung 16 mit einem Knotenpunkt 27 der Spule 10 und des Kondensators 11 verbunden ist.

Wird die Antenne des Datenträgers in die Nähe einer Metalloberfläche gebracht, so kommt es durch Wirbelstromeffekte zu einer Verringerung der Induktivität der Antennenspule 10. Dies führt dazu, dass die Resonanzfrequenz der Antenne zu höheren Frequenzen hin verstimmt wird. Um die Antenne erneut auf die Resonanzfrequenz abzugleichen, werden üblicherweise zusätzliche Kapazitäten, welche auf dem Datenträger vorgesehen werden, parallel zur Schwingkreiskapazität 11 geschaltet. Ein Problem ist jedoch, dass die Güte des Schwingkreises - und damit auch die Performace des Datenträgers - vom Verhältnis des Kapazitätswerts des Kondensators 11 zum Induktivitätswert der Spule 10 (C/L) in dem Antennenschwingkreis abhängt.

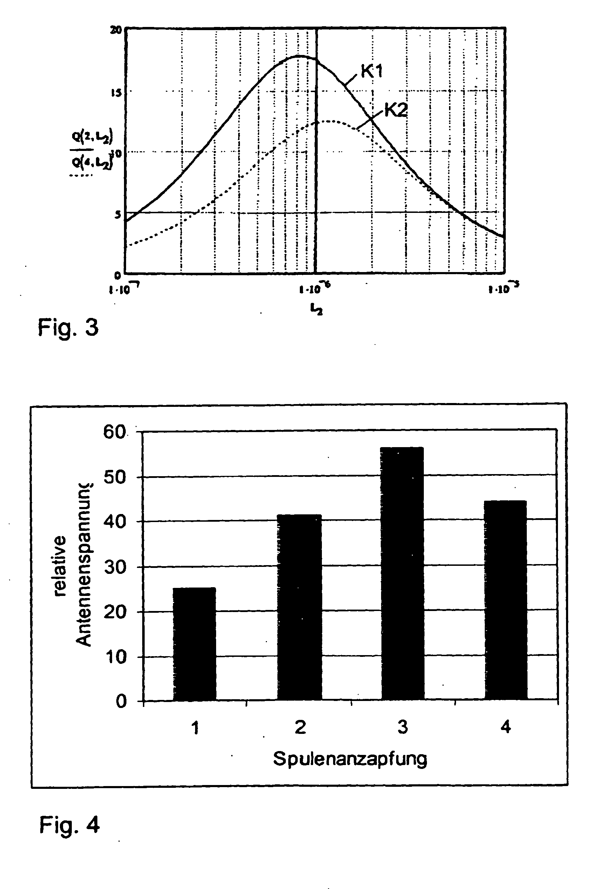

Für einen bestimmten Induktivitätswert ergibt sich bei konstanter Resonanzfrequenz eine maximale Güte. Wird bei einem Schwingkreis mit optimaler Güte jedoch die Induktivität geringer, so kann zwar die ursprüngliche Resonanzfrequenz durch das Hinzuschalten zusätzlicher Kapazitäten wieder erreicht werden, die Güte wird jedoch immer geringer ausfallen. Dies zeigt auch die Darstellung der Güte Q in Fig. 3 gemäß nachfolgender Formel (1), wobei die Resonanzfrequenz des Schwingkreises durch Ändern der Kapazität 11 konstant gehalten wird:

$$Q = \frac{1}{\frac{R_2}{\omega L_2} + \frac{\omega L_2}{R_L}} \qquad (1)$$

Fig. 3 zeigt hierbei den Verlauf der Güte Q bei konstanter Resonanzfrequenz des Schwingkreises und veränderter Spuleninduktivität (vgl. Kurven K1 und K2), wobei

$$C_2 = \frac{1}{\omega^2 * L_2} \qquad (2)$$

gilt und unterschiedliche Ohmsche Widerstände der Spuleninduktivität angenommen sind.

Bei einem erfindungsgemäßen Datenträger ist daher vorgesehen, die Induktivität der Spule 10 nach Möglichkeit konstant zu halten, indem eine Veränderung der Windungszahl der Spule 10 vorgenommen wird. Die Windungszahl der Spule 10 wird dabei derart angepasst, dass unabhängig von der Umgebung des Datenträgers eine annähernd konstante Resonanzfrequenz erreicht werden kann. Zu diesem Zweck ist der Ausgang des Verstärkers, d.h. des Treibers 23, über die Anzapfungsauswahlvorrichtung 13 mit einer der Spulenanzapfungen 17a, 17b, 17c, 17d der Spule 10 verbunden, so dass je nach gewählter Spulenanzapfung eine unterschiedliche Windungszahl und damit eine unterschiedliche Induktivität der Spule 10 wirksam werden kann.

Die Auswahl der optimalen Spulenanzapfung erfolgt im einfachsten Fall durch eine Überprüfung der Kommunikationsreichweite des Datenträgers, welche im Falle der optimalen Spulenanzapfung ein Maximum ergibt. Hierzu benötigt der Datenträger eine Kommunikation mit einem Lesegerät, um so mittels eines auf die Anzapfungsauswahlvorrichtung 13 wirkenden Signals über einen Schalter 14 die Spulenanzapfung 17a, 17b, 17c, 17d umzuschalten und die optimale Spulenanzapfung bestimmen zu können. Die Kommunikation mit dem Lesegerät kann kontaktlos über den Antennenschwingkreis des Datenträgers erfolgen. Alternativ kann die Kommunikation auch kontaktbehaftet erfolgen, z.B. über ein Speicherkarten-Interface in einem Endgerät, wenn der Datenträger eine Speicherkarte mit kontaktlosem Interface darstellt.

Eine alternative Variante besteht darin, im Sendebetrieb des Datenträgers die Spannung an der Spule 10 und dem Kondensator 11 (d.h. dem Knotenpunkt 25) des Antennenschwingkreises mittels der Messvorrichtung 16 zu messen. Um die optimale Spulenanzapfung 17a, 17b, 17c, 17d zu ermitteln, wird über den Schalter 14 der Anzapfungsauswahlvorrichtung 13 eine erste Anzapfung ausgewählt, für eine kurze Zeit ein Hochfrequenz-Signal ausgesendet und die Spannung an dem Knotenpunkt 27 gemessen. Iterativ wird dies für die weiteren Anzapfungen durchgeführt und die Messung der Spannung wiederholt. Für diejenige Spulenanzapfung, für die die Resonanzfrequenz des Schwingkreises der Sendefrequenz des Datenträgers entspricht, erreicht die gemessene Spannung ein Maximum, wie dies beispielhaft in Fig. 4 dargestellt ist. Da sich der Wert der Kapazität 11 nicht verändert hat, entspricht die Induktivität der Spule 10 damit wieder dem Wert, den die Spule ohne die Nähe zu einer Metallfläche besitzt. Die Verringerung der Induktivität wird also durch zusätzliche Windungen kompensiert. Da die Induktivität weitgehend konstant gehalten werden kann, bleibt auch das L/C-Verhältnis und somit die Güte des Schwingkreises konstant.

Fig. 4 illustriert die relative Antennenspannung von vier Spulenanzapfungen, welche in der Figur mit 1, 2, 3 und 4 gekennzeichnet sind. Im Ausführungsbeispiel wird bei Spulenanzapfung 3, z.B. Spulenanzapfung 17c in Fig. 1, eine maximale Spannung gemessen, so dass diese für den Betrieb des Datenträgers ausgewählt wird.

Eine konkrete Realisierung der Anzapfungsauswahlvorrichtung 13 ist in Fig. 2 dargestellt. Hierbei verfügt die Anzapfungsauswahlvorrichtung 13 des Datenträgers über Ausgangstreiber 26a, 26b, 26c und 26d, die jeweils mit einer der Spulenanzapfungen 17a, 17b, 17c und 17d verbunden sind. Die Ausgangstreiber 26a, 26b, 26c, 26d können jeweils über ein Enable-Signal En einer Auswahlschaltung 25 aktiviert werden. Liegt das Enable-Signal an einem jeweiligen Ausgangstreiber nicht an, so können diese an ihrem Ausgang in einen hochohmigen Zustand (sog. Z-State) geschaltet werden. Es ist hierbei vorgesehen, jeweils genau einen der Ausgangstreiber 26a, 26b, 26c, 26d in einen aktiven Zustand zu schalten und alle anderen Ausgangstreiber in einen hochohmigen Zustand zu schalten. Die Aktivierung eines jeweiligen Ausgangstreibers erfolgt in Abhängigkeit eines Steuersignals CTRL, welches beispielsweise von der Messvorrichtung 16 erzeugt wird. Diese bestimmt die optimale Anpassung bzw. Auswahl der Spulenanzapfung nach Durchführung der oben beschriebenen Messreihe.

In Fig. 2 ist die Messvorrichtung 16 über eine Diode 19 und einen Kondensator 18 mit dem Knotenpunkt 27 des Antennenschwingkreises gekoppelt.

Datenträger zur aktiven Lastmodulation weisen auch im Standby-Betrieb, d.h. außerhalb deren Reichweite eines Lesegerätes, eine hohe Stromaufnahme auf. Eine Leistungssteuerung oder ein Power-Management ermöglicht die Energieaufnahme des Datenträgers, insbesondere mit aktiver Lastmodulation, weitest möglich zu verringern.

Das Energiemanagement umfasst eine Leistungssteuerung zum Abschalten nicht benötigter Komponenten im Standby-Betrieb sowie eine Leistungssteuerung zur Einstellung der Sendeleistung im Sendebetrieb, welche in Gestalt getrennter oder einer gemeinsamen elektronischen Schaltung ausgeführt sein können.

Das Energiemanagement für den Standby-Betrieb ist in Fig. 5 dargestellt. Hierbei ist eine Leistungssteuerung 71 in einem an sich bekannten aktiven RFID-Interface 60 angeordnet. Die Leistungssteuerung 71 ist eingangsseitig mit einer Empfangsvorrichtung, umfassend einen Treiber 69 sowie einen Schwellwertschalter 70, verbunden. Die Empfangsvorrichtung ihrerseits ist mit einer Antenne 61 sowie einem Kondensator 62 des Antennenschwingkreises gekoppelt. Der Antennenschwingkreis 62 ist mit einem Verstärker 63 verbunden. Dieser erhält von einem Modulator 64 sein Eingangssignal. Der Modulator 64 ist in bekannter Weise mit einem Oszillator 66 und einem nachgeschalteten Spannungsteiler 67 verbunden, so dass diesem ein Frequenzsignal von beispielsweise 13,56 MHz bereitgestellt wird. Ein Eingangssignal SIGIN, das von einem Sicherheitselement 72 bereitgestellt wird, wird dem Modulator 64 und einem Zeitglied 65 zugeführt, welches ein Steuersignal CTRL erzeugt, das dem Verstärker 63 und einem Schalter 68 zur Umschaltung zwischen Empfangs- und Sendeeinrichtung zugeführt wird. Über den Schalter 68 kann das von der Empfangsvorrichtung abgegebene und auch der Leistungssteuerung 71 zugeführte Signal an einen Ausgang (SIGOUT) gelegt werden. Die Leistungssteuerung 71 stellt ausgangsseitig eine Ausgangsspannung Vcc-out bereit, welche dem Sicherheitselement 72 als Eingangsspannung Vcc-in in einem ersten Betriebsmodus, dem Stromsparmodus (Standby-Betrieb) zugeführt wird. Darüber hinaus kann zur Abschaltung nicht benötigter Komponenten während des Standby-Betriebs das aktive RFID-Interface 60 mit der Spannung Vcc-out versorgt werden.

Erfindungsgemäß ist vorgesehen, dass die Leistungssteuerung 71 für den Standby-Betrieb das Ausgangssignal SIGOUT der Empfangsvorrichtung kontinuierlich daraufhin überwacht, ob sich ein Lesegerät, mit dem der Datenträger ausgelesen werden kann, in Kommunikationsreichweite befindet. So ist beispielsweise bei Verwendung der NFC-WI (S2C) auch nur dann ein 13,56 MHz Clock-Signal auf der Leitung SIGOUT verfügbar, wenn sich der erfindungsgemäße Datenträger in Reichweite eines Lesegerätes befindet. Es versteht sich, dass auch andere Kriterien, z.B. der Pegel des Empfangssignals, ausgewertet werden können.

Weiterhin ist vorgesehen, dass das Leistungsmanagement das Sicherheitselement 72, sofern dieses nicht anderweitig benötigt wird, sowie alle nichtbenötigten Komponenten, wie z.B. Frequenzaufbereitung, Timer, Modulator usw., in einen stromsparenden Standby-Modus schaltet, so lange kein Lesegerät in Lesereichweite detektiert werden kann. Die Ausgangstreiber des Verstärkers 63 werden dabei in einem Low-Zustand gehalten, um die korrekte Anschaltung der Antenne für den Empfangsbetrieb zu garantieren. Gelangt der erfindungsgemäße Datenträger in die Reichweite eines Lesegerätes, so wird der Standby-Modus wieder verlassen.

Das Energiemanagement für den Sendebetrieb des Datenträgers ist in Fig. 6 dargestellt. Eine Sendeendstufe besteht aus einer Vielzahl von Ausgangstreibern 110,111,112,113,114 sowie 210, 211, 212, 213, 214, die ausgangsseitig parallel geschaltet und mit dem Antennenschwingkreis, umfassend die Spule 61, den Kondensator 62 und den Widerstand 73, verbunden sind. Eingangsseitig sind die Ausgangstreiber zu unterschiedlichen Gruppen, im Beispiel zu eins, zwei, vier, acht Ausgangstreibern zusammengeschaltet. Darüber hinaus sind die Ausgangstreiber 110,111,112,113,114 und 210, 211, 212, 213, 214 mit Ausgängen von Schaltvorrichtungen 100 bzw. 200 zusammengeschaltet. Am Eingang der Schaltvorrichtungen 100 bzw. 200 wird ein Modulationssignal MOD invertiert und nichtinvertiert eingespeist. Aufgabe der Schaltvorrichtungen 100, 200 ist es, das Modulationssignal MOD in Abhängigkeit eines Steuersignals CTRL der Leistungssteuerung 71 auf den Eingang eines der Ausgangstreiber zu schalten oder andernfalls den Ausgangstreiber in einen hochohmigen Zustand zu schalten. Die Leistungssteuerung 71 ist mit dem Empfangsteil der Schaltung verbunden und derart ausgelegt, dass aus dem Pegel des empfangenen RF-Signals Steuerinformationen für die Schaltvorrichtungen abgeleitet werden können. Der Ausgang der Leistungssteuerung 71 ist mit den Steuereingängen der Schaltvorrichtungen 100, 200 verbunden.

Die Ausgangsleistung, d.h. der Antennenstrom, der Sendevorrichtung kann durch das Parallelschalten von Ausgangstreibern erhöht werden. Dies führt jedoch auch zu einer größeren Energieaufnahme durch den Datenträger während des Sendebetriebs. Eine erhöhte Sendeleistung ist andererseits aber bei einer gewissen Entfernung zwischen Lesegerät und Datenträger notwendig. Bei geringerer Entfernung ist auch eine geringere Ausgangsleistung des Senders zur Datenübertragung ausreichend.

Erfindungsgemäß ist vorgesehen, dass durch das Leistungsmanagement der Pegel des Empfangssignals (RX-Signal) am Empfänger kontinuierlich überwacht wird und daraus ein entsprechendes Steuersignal für die Schaltvorrichtungen 100, 200 abgeleitet wird. Bei einem schwachen Signal, welches aus einem großen Abstand zwischen dem Lesegerät und dem Datenträger resultiert, sollen dabei im nachfolgenden Sendebetrieb durch die Schaltvorrichtungen 100, 200 viele Ausgangstreiber parallel geschaltet werden. Bei einem starken Empfangssignal RX_Signal, d.h. einem geringen Abstand zwischen dem Lesegerät und dem Datenträger, werden weniger Ausgangstreiber oder nur ein einziger Ausgangstreiber pro Anschluss eingesetzt. Eine mögliche Konfiguration kann darin bestehen, bei einem schwächer werdenden Eingangssignal, ausgehend von einem maximalen Eingangssignal, zunächst einen Ausgangstreiber pro Anschluss in Betrieb zu nehmen und dann je nach Pegel des Empfangssignals jeweils zwei, vier, acht, 16 oder mehr Ausgangstreiber parallel anzusteuern.

Die Verwendung eines NFC (Near Field Communication)-Gerätes in einem tragbaren, intelligenten Gerät als Lesegerät (sog. Reader Emulation Mode) erlaubt es, Daten aus einem kontaktlosen Datenträger, wie z.B. einer kontaktlosen Chipkarte oder einem Smart-Label, auszulesen. In einigen NFC-Anwendungen, wie z.B. Touch-and-Travel der Deutschen Bahn, werden daher solche kontaktlosen Datenträger an besonders gekennzeichneten Standorten befestigt, welche als Touchpoint bezeichnet werden. Diese stellen standortbezogene Informationen bereit. Bei dem Projekt Touch-and-Travel werden diese Daten zum Antreten (Check-in) oder Beenden (Check-out) einer Bahnfahrt mit einem elektronischen Ticket verwendet.

Ein Problem dieser Touchpoints ist die oft geringe Lesereichweite, aufgrund der sehr kleinen Sendeleistung und/oder des kleinen Antennendurchmessers der NFC-Antenne in einem Endgerät. Als Endgerät wird typischerweise ein Mobilfunkendgerät verwendet. Aus diesem Grund ist es notwendig, einen Punkt auf der Oberfläche des Touchpoints zu suchen, an dem eine Kommunikation überhaupt zuverlässig möglich ist. Eine Verbesserung der Leseeigenschaften (Reichweite) solcher exponiert befestigter Transponder in den erwähnten Touchpoint ist dadurch möglich, dass ein Sicherheitselement, z.B. in Gestalt eines Smart-Card-Chips, in dem Touchpoint mit einem HF-Interface zur Erzeugung einer aktiven Lastmodulation ausgestattet wird. Dies ist schematisch in Fig. 5 dargestellt.

Fig. 5 zeigt zwei bekannte Ansätze zur Verbindung eines Sicherheitselements 51 bzw. 55 mit einem aktiven RFID-Interface 52 bzw. 56. In bekannter Weise sind die RFID-Interfaces 52 bzw. 56 mit Antennen 53 bzw. 57 gekoppelt. Mit dem Bezugszeichen 50 bzw. 54 ist jeweils eine lokale Energieversorgung gekennzeichnet. Zur Verbindung zwischen dem Sicherheitselement 51 bzw. 55 und dem RFID-Interface (HF-Interface) kann das bekannte NFC Wired Interface (NFC-WI, früher S$^2$C), das SWP-Interface (Single Wired Protocol) oder auch ein anderes Interface eingesetzt werden.

Zur Stromversorgung der Anordnung kann eine Solarzelle, eine Batterie, eine Kombination aus Solarzelle und Batterie oder eine andere Stromversorgung eingesetzt werden. Die Stromaufnahme einer solchen Anordnung kann sehr gering gehalten werden, da das aktive RFID-Interface nur zur Datenübertragung an ein NFC-Interface kurzzeitig in den Sendebetrieb wechselt. Die typische Leistungsaufnahme eines solchen Interfaces beträgt etwa 0,2 bis 0,3 Watt im Sendebetrieb. Im Standby-Betrieb ist die Leistungsaufnahme geringer. Die Werte wurden an einem typischen Datenträger mit aktiver Lastmodulation gemessen.

Ein Vorteil dieser Anordnung besteht darin, dass die Anbindung des Datenträgers an ein Hintergrundsystem - im Gegensatz zu einem Lesegerät - nicht erforderlich ist.

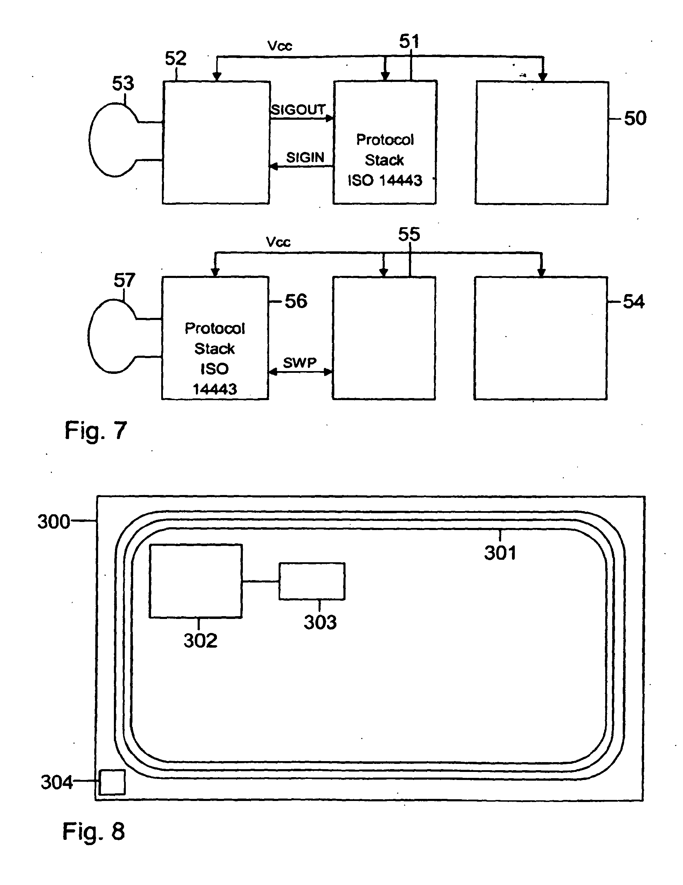

In der baulichen Ausgestaltung einer solchen Anordnung ist vorstellbar, die Schaltungskomponenten des RFID-Interfaces, die Stromversorgung sowie auch die Antenne des RFID-Interfaces auf einem gedruckten Schaltungsträger 300 anzuordnen. Dies ist schematisch in Fig. 8 dargestellt. Das Sicherheitselement 303 lässt sich dann z.B. in der Bauform einer SIM-Karte (SIM = Subscriber Identity Module) auf einen Sockel auf dem Schaltungsträger 300 einsetzen. Hierdurch erhält man die Möglichkeit einer einfachen Konfiguration. Es ist ohne Weiteres möglich, das Sicherheitselement auch fest einzulöten. In Fig. 8 sind weiter eine Antenne 301, ein Stekkerelement zur Stromversorgung 304 sowie Komponenten des aktiven RFID-Interfaces mit dem Bezugszeichen 302 dargestellt.

## Patentansprüche

1. Verfahren zum automatischen Abgleich der Resonanzfrequenz eines Antennenschwingkreises (10, 11) eines portablen Datenträgers mittels einer eine Vielzahl von Spulenwindungen (10a, 10b, 10c, 10d) urnfassenden Spule (10) des Datenträgers, umfassend die folgenden Schritte in dem Datenträger nach der Herstellung des Datenträgers:

   - Bestimmen einer geeigneten Spulenwindungszahl in Abhängigkeit der Induktivität der Spule (10);
   - Aktivieren der Anzahl der Spulenwindungen (10a, 10b, 10c, 10d) der Spule (10), die der geeigneten Spulenwindungszahl entspricht

   **dadurch gekennzeichnet, dass**
   die Schritte des Bestimmens und des Aktivierens nach dem Einbau des Datenträgers, der eine Chipkarte oder eine Massenspeicherkarte ist, in ein Endgerät erfolgen;
   zum Bestimmen der geeigneten Spulenwindungszahl an der Spule (10) vorgesehene Spulenanzapfungen (17a, 17b, 17c, 17d) iterativ ausgewählt werden und zumindest ein Parameter der Spule (10) oder des Antennenschwingkreises (10,11) ermittelt und auf ein Optimum hin überprüft wird, und als Parameter eine Spannung an der Spule (10) des Antennenschwingkreises (10, 11) für jede der Spulenanzapfungen (17a, 17b, 17c, 17d) gemessen wird, während ein hochfrequentes Signal durch den Datenträger ausgesendet wird, wobei diejenige Anzahl an Spulenwindungen (10a, 10b, 10c, 10d) ausgewählt wird, bei der sich eine maximale Spannung ergibt.

2. Verfahren nach Anspruch 1, **dadurch gekennzeichnet, dass** diejenigen Spulenwindungen (10a, 10b, 10c, 10d) der Spule (10), welche nicht aktiviert werden in einen hochohmigen Zustand geschaltet werden.

**3.** Verfahren nach einem der vorherigen Ansprüche, **dadurch gekennzeichnet, dass** der Datenträger zum Übertragen von Daten zu einem Lesegerät, zu welchem Daten von Transpondern durch Modulation eines Feldes des Lesegerätes übertragen werden können, in einem aktiven Betriebsmodus ein eigenes Feld erzeugt und als ein Signal sendet, welches für das Lesegerät als eine Modulation des Lesegerätfeldes durch einen Transponder auswertbar ist.

**4.** Verfahren nach einem der vorherigen Ansprüche, **dadurch gekennzeichnet, dass** in einem ersten Betriebsmodus das Empfangssignal (RX-Signal) einer Empfangsvorrichtung (69, 70) des Datenträgers daraufhin überwacht wird, ob sich das Lesegerät, mit dem der Datenträger ausgelesen werden kann, in Kommunikationsreichweite des Datenträgers befindet.

**5.** Verfahren nach Anspruch 4, **dadurch gekennzeichnet, dass** in dem ersten Betriebsmodus nicht benötigte Komponenten des Datenträgers in einen Stromsparmodus versetzt werden.

**6.** Verfahren nach Anspruch 4 oder 5, **dadurch gekennzeichnet, dass** über eine Aktivierung einer Anzahl an parallel geschalteten Ausgangstreibern (110,111,112,113, 114; 210, 211, 212, 213, 214) der Stromverbrauch und/oder die Ausgangsleistung des Datenträgers eingestellt wird.

**7.** Verfahren nach einem der Ansprüche 4 bis 6, **dadurch gekennzeichnet, dass** der Pegel des Empfangssignals (RX-Signal) der Empfangsvorrichtung (69, 70) kontinuierlich überwacht wird zur Ableitung eines Steuersignals (CTRL) für die Anzahl an Ausgangstreibern (110, 111,112,113, 114; 210,211,212,213,214).

**8.** Portabler Datenträger, umfassend einen integrierten Schaltkreis, eine eine Vielzahl von Spulenwindungen (10a, 10b, 10c, 10d) umfassende Spule (10) eines Antennenschwingkreises (10, 11), die zur Energieaufnahme aus einem elektromagnetischen Feld eingerichtet ist, in dem sich der Datenträger befindet, umfassend

     - eine Aktivierungseinrichtung, die eingerichtet ist, Spulenwindungen (10a, 10b, 10c, 10d) der Spule (10) zur Energieaufnahme aus dem elektromagnetischen Feld zu aktivieren,
     - eine Steuereinrichtung, die eingerichtet ist,

       - eine geeignete Spulenwindungszahl in Abhängigkeit der Induktivität der Spule (10) zu bestimmen, und
       - eine Anzahl der Spulenwindungen (10a, 10b, 10c, 10d) der Spule (10), die der geeigneten Spulenwindungszahl entspricht, zu aktivieren, und

wobei

der Datenträger eine Chipkarte oder eine Massenspeicherkarte ist und angepasst ist zur Ausführung eines Verfahrens nach einem der Ansprüche 1 bis 7.

## Claims

**1.** A method for automatically adjusting the resonance frequency of an antenna oscillator circuit (10, 11) of a portable data carrier by means of a coil (10) of the data carrier, comprising a multiplicity of coil windings (10a, 10b, 10c, 10d), comprising the following steps in the data carrier after the manufacture of the data carrier:

     - determining a suitable number of coil windings in dependence on the inductance of the coil (10);
     - activating the number of coil windings (10a, 10b, 10c, 10d) of the coil (10) that corresponds to the suitable number of coil windings,

**characterized in that**
the determining and activating steps are effected after the installation of the data carrier, which is a chip card or a mass memory card, into an end device;
for determining the suitable number of coil windings, coil taps (17a, 17b, 17c, 17d) provided on the coil (10) are iteratively selected and at least one parameter of the coil (10) or of the antenna oscillator circuit (10, 11) is ascertained and checked for an optimum, and
as a parameter a voltage is measured on the coil (10) of the antenna oscillator circuit (10, 11) for each of the coil taps (17a, 17b, 17c, 17d) while a highfrequency signal is being emitted by the data carrier, whereby that number of coil windings (10a, 10b, 10c, 10d) is selected at which a maximum voltage results.

**2.** The method according to claim 1, **characterized in that** those coil windings (10a, 10b, 10c, 10d) of the coil (10) that are not activated are switched to a high-ohmic state.

**3.** The method according to either of the previous claims, **characterized in that**, in an active operating mode, the data carrier, for transferring data to a reading device to which data can be transferred by transponders through modulation of a field of the reading device, produces its own field and sends it as a signal which is evaluable for the reading device as a modulation of the reading-device field by a transponder.

**4.** The method according to any of the previous claims, **characterized in that**, in a first operating mode, the receive signal (RX signal) of a receiving apparatus (69, 70) of the data carrier is monitored as to whether the reading device with which the data carrier can be read out is located within communication range of the data carrier.

5. The method according to claim 4, **characterized in that**, in the first operating mode, unneeded components of the data carrier are put in a power-saving mode.

6. The method according to claim 4 or 5, **characterized in that** the current consumption and/or the output power of the data carrier is adjusted via an activation of a number of parallel-connected output drivers (110, 111, 112, 113, 114; 210, 211, 212, 213, 214).

7. The method according to any of claims 4 to 6, **characterized in that** the level of the receive signal (RX signal) of the receiving apparatus (69, 70) is continuously monitored for deriving a control signal (CTRL) for the number of output drivers (110, 111, 112, 113, 114; 210, 211, 212, 213, 214).

8. A portable data carrier, comprising an integrated circuit, a coil (10) of an antenna oscillator circuit (10, 11), comprising a multiplicity of coil windings (10a, 10b, 10c, 10d), said coil being adapted to draw energy from an electromagnetic field in which the data carrier is located, comprising

   - an activation device which is adapted to activate coil windings (10a, 10b, 10c, 10d) of the coil (10) to draw energy from the electromagnetic field,
   - a control device which is adapted to

      - determine a suitable number of coil windings in dependence on the inductance of the coil (10), and
      - activate a number of coil windings (10a, 10b, 10c, 10d) of the coil (10) that corresponds to the suitable number of coil windings, and

   wherein the data carrier is a chip card or a mass memory card and is adapted to perform a method according to any of claims 1 to 7.

**Revendications**

1. Procédé d'ajustement automatique de fréquence de résonance d'un circuit oscillant d'antenne (10, 11) d'un support de données portable au moyen d'une bobine (10) du support de données dotée d'une pluralité de spires de bobine (10a, 10b, 10c, 10d), comprenant les étapes suivantes dans le support de données après la fabrication du support de données :

   - détermination d'un nombre approprié de spires de bobine en fonction de l'inductance de la bobine (10) ;
   - activation du nombre de spires de bobine (10a, 10b, 10c, 10d) de la bobine (10) qui correspond au nombre approprié de spires de bobine

**caractérisé en ce que**
les étapes de la détermination et de l'activation ont lieu après la mise en place du support de données, qui est une carte à puce ou une carte mémoire de masse, dans un terminal ;
pour la détermination du nombre approprié de spires de bobine, des prises de prélèvement sur bobine (17a, 17b, 17c, 17d) prévues à la bobine (10) sont sélectionnées itérativement et au moins un paramètre de la bobine (10) ou du circuit oscillant d'antenne (10, 11) est identifié et vérifié en vue d'un optimum, et en tant que paramètre, une tension à la bobine (10) du circuit oscillant d'antenne (10, 11) est mesurée pour chacune des prises de prélèvement sur bobine (17a, 17b, 17c, 17d) pendant qu'un signal à haute fréquence est envoyé par le support de données, le nombre de spires de bobine (10a, 10b, 10c, 10d) sélectionné étant celui auquel se produit une tension maximale.

2. Procédé selon la revendication 1, **caractérisé en ce que** les spires de bobine (10a, 10b, 10c, 10d) de la bobine (10) qui ne sont pas activées sont placées dans un état à haute impédance.

3. Procédé selon une des revendications précédentes, **caractérisé en ce que** le support de données, pour la transmission de données à un appareil de lecture auquel des données de transpondeur doivent être transmises par modulation d'un champ de l'appareil de lecture, dans un mode de fonctionnement actif, génère un propre champ et envoie ce dernier en tant que signal qui est évaluable pour l'appareil de lecture en tant qu'une modulation du champ de l'appareil de lecture par un transpondeur.

4. Procédé selon une des revendications précédentes, **caractérisé en ce que**, dans un premier mode de fonctionnement, le signal de réception (signal RX) d'un dispositif de réception (69,70) du support de données est surveillé pour repérer si l'appareil de lecture avec lequel le support de données peut être lu se trouve à portée de communication du support de données.

5. Procédé selon la revendication 4, **caractérisé en ce que**, dans le premier mode de fonctionnement, des composantes non requises du support de données sont mises dans mode d'économie de courant.

**6.** Procédé selon la revendication 4 ou 5, **caractérisé en ce que**, par une activation d'un nombre de pilotes de sortie branchés en parallèle (110, 111, 112, 113, 114; 210, 211, 212, 213, 214), la consommation de courant et/ou la puissance de sortie du support de données est réglée.

**7.** Procédé selon une des revendications de 4 à 6, **caractérisé en ce que** le niveau du signal de réception (signal RX) du dispositif de réception (69,70) est surveillé de manière continue pour la déduction d'un signal de commande (CTRL) pour le nombre de pilotes de sortie (110, 111, 112, 113, 114; 210, 211, 212, 213, 214).

**8.** Support de données portable, comprenant un circuit intégré, une bobine (10) d'un circuit oscillant d'antenne (10, 11) dotée d'une pluralité de spires de bobine (10a, 10b, 10c, 10d) qui est équipée pour absorber de l'énergie d'un champ électromagnétique dans lequel le support de données se trouve, comprenant

     - un dispositif d'activation qui est équipé pour activer des spires de bobine (10a, 10b, 10c, 10d) de la bobine (10) pour absorber de l'énergie d'un champ électromagnétique,
     - un dispositif de commande qui est équipé pour

         - déterminer un nombre approprié de spires de bobine en fonction de l'inductance de la bobine (10), et
         - activer un nombre des spires de bobine (10a, 10b, 10c, 10d) de la bobine (10) qui correspond au nombre approprié de spires de bobine, et

le support de données étant une carte à puce ou une carte mémoire de masse et étant adapté à exécuter un procédé selon une des revendications de 1 à 7.

**Fig. 1**

**Fig. 2**

Fig. 3

Fig. 4

Fig. 5

Fig. 6

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1801741 A2
- WO 2006000446 A1
- WO 2008002303 A1
- US 6685096 B1
- EP 1087332 B1
- US 7304577 A